(19) **Europäisches Patentamt**
**European Patent Office**
**Office européen des brevets**

(11) **EP 0 978 411 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(51) Int Cl.:
***B60M 3/00*** *(2006.01)*

(21) Anmeldenummer: **99810583.7**

(22) Anmeldetag: **05.07.1999**

(54) **Verfahren zur Ermittlung elektrischer Eigenschaften eines Bahnnetzes**

Method for determining electrical properties of a railway supply network

Procédé pour déterminer les caractéristiques électriques d'un réseau d'alimentation de chemin de fer

(84) Benannte Vertragsstaaten:
**DE FR IT**

(30) Priorität: **05.08.1998 DE 19835365**

(43) Veröffentlichungstag der Anmeldung:
**09.02.2000 Patentblatt 2000/06**

(73) Patentinhaber: **Bombardier Transportation GmbH**
**13627 Berlin (DE)**

(72) Erfinder:
• **Meyer, Markus**
**6030 Ebikon (CH)**
• **Petersen, Anders, Dr.**
**S-17274 Sundbyberg (SE)**

(74) Vertreter: **Thielmann, Andreas et al**
**COHAUSZ & FLORACK**
**Patent- und Rechtsanwälte**
**Postfach 10 18 30**
**40009 Düsseldorf (DE)**

(56) Entgegenhaltungen:
• PETROV + GRIMALSKI: "Berechnung der elektrischen Grössen in Oberleitungen und Schienen von Wechselstrombahnen" ELEKTRISCHE BAHNEN, Bd. 88, Nr. 11, November 1990 (1990-11), Seiten 398-402, XP000165217 munchen
• PATENT ABSTRACTS OF JAPAN vol. 1997, no. 11, 28. November 1997 (1997-11-28) & JP 09 188253 A (MITSUBISHI ELECTRIC CORP), 22. Juli 1997 (1997-07-22)
• CHANG, CHAN, HO & LEE: "AI applications and solution techniques for AC-railway-system control and simulation" IEE-PROCEEDINGS-B, Bd. 140, Nr. 3, Mai 1993 (1993-05), Seiten 166-176, XP000304270 stevenage
• PATENT ABSTRACTS OF JAPAN vol. 1996, no. 6, 28. Juni 1996 (1996-06-28) & JP 08 034267 A (WEST JAPAN RAILWAY CO), 6. Februar 1996 (1996-02-06)

EP 0 978 411 B1

**Beschreibung**

Technisches Gebiet

Die Erfindung betrifft ein Verfahren zur Ermittlung elektrischer Eigenschaften eines Bahnnetzes gemäss Oberbegriff von Anspruch 1.

Stand der Technik

Die Ermittlung des elektrischen Verhaltens eines Bahnnetzes ist in der Praxis sehr schwierig, da nicht nur die Eigenschaften des Netzes und der verschiedenen fixen Installationen, sondern auch jene der Triebfahrzeuge zu berücksichtigen sind. In der Regel charakterisiert man die Leitungen zwischen den Knotenpunkten, Installationen und Fahrzeugen durch ihren Längsimpedanz- und Queradmittanzbelag und die Installationen und Fahrzeuge, Unterstationen, Booster-Transformatoren, usw. durch ihre jeweiligen elektrischen Eigenschaften. Um ein solches Netz zu berechnen, müssen eine Vielzahl von Daten, wie z.B. alle Fahrzeugpositionen und -typen, bekannt sein. Ausserdem wird die Netzwerkgeometrie höchst kompliziert und rechnerisch schwer zu erfassen.

In PETROV, O. I. und GRIMALSKI, K. "Berechnung der elektrischen Größen in Oberleitungen und Schienen von Wechselstrombahnen" ELEKTRISCHE BAHNEN, Bd. 88, Nr. 11, November 1990 (1990-11), Seiten 398-402, werden Impedanz- bzw. Queradmittanzbelagskorrekturen durch Multiplikation mit entsprechenden Objektmatrizen vorgenommen. CHANG, C.S., CHAN, T.T., HO, S.L. und LEE, K.K. "AI applications and solution techniques for AC-railway-system control and simulation" IEE-PROCEEDINGS-B, Bd. 140, Nr. 3, Mai 1993 (1993-05), Seiten 166-176, behandelt ein wissensbasiertes Modell zur Steuerung und Simulation von Wechselstrombahnen.

Darstellung der Erfindung

Es stellt sich deshalb die Aufgabe, ein Verfahren der eingangs genannten Art bereitzustellen, das die Probleme bekannter Verfahren zumindest teilweise vermeidet. Insbesondere soll es auch für komplexe Netze mit einer grossen Zahl von Fahrzeugen bei kleinem rechnerischen Aufwand gute Resultate liefern.

Diese Aufgabe wird vom Verfahren gemäss Anspruch 1 gelöst. Bevorzugte Ausgestaltungen sind in den abhängigen Ausprüchen definiert.

Erfindungsgemäss werden einzelne Objekte, wie z.B. Fahrzeuge, Booster-Transformatoren oder Auto-Transformatoren, als Korrektur im Längsimpedanz- bzw. Queradmittanzbelag des jeweiligen Streckenabschnitts berücksichtigt. Dadurch wird die Struktur des zu berechnenden Netzes vereinfacht und gleichzeitig entfällt die Notwendigkeit, die Positionen der einzelnen Objekte genau zu kennen. Dennoch zeigt es sich, dass das auf diese Weise vereinfachte Modell in der Lage ist, die Eigenschaften des Netzes gut vorauszusagen.

Beispielsweise kann ein Fahrzeug als Korrektur des Queradmittanzbelags berücksichtigt werden, d.h. der Beitrag des Fahrzeugs zu den Eigenschaften des Streckenabschnitts wird über den Streckenabschnitt gemittelt. Desgleichen können Booster-Transformatoren z.B. als Korrektur des Längsimpedanzbelags verrechnet werden.

Das erfindungsgemässe Verfahren erlaubt es insbesondere auch, mit Erwartungswerten zu arbeiten. So kann z.B. die Korrektur für einen gegebenen Typ von Objekten mit der zu erwartenden Zahl von Objekten multipliziert werden. Es ist also z.B. nicht notwendig, die momentane Anzahl von Fahrzeugen auf einem Streckenabschnitt exakt zu kennen.

Das Verfahren kann eingesetzt werden, um die elektrischen Eigenschaften eines Bahnnetzes, wie z.B. dessen Stabilität und allfällige Resonanzfrequenzen, zu ermitteln.

Kurze Beschreibung der Zeichnungen

Weitere bevorzugte Ausführungen, Vorteile und Anwendungen der Erfindung ergeben sich aus den abhängigen Ansprüchen und aus der nun folgenden Beschreibung anhand der Figuren. Dabei zeigen:

Fig. 1 ein Beispiel für ein einfaches Streckennetz,
Fig. 2 einen Streckenabschnitt,
Fig. 3 das Ersatzschaltbild für einen Streckenabschnitt,
Fig. 4 eine kompliziertere Leitungsgeometrie und
Fig. 5 ein vereinfachtes Ersatzschaltbild für die Queradmittanz der Situation gemäss Fig. 4.

Wege zur Ausführung der Erfindung

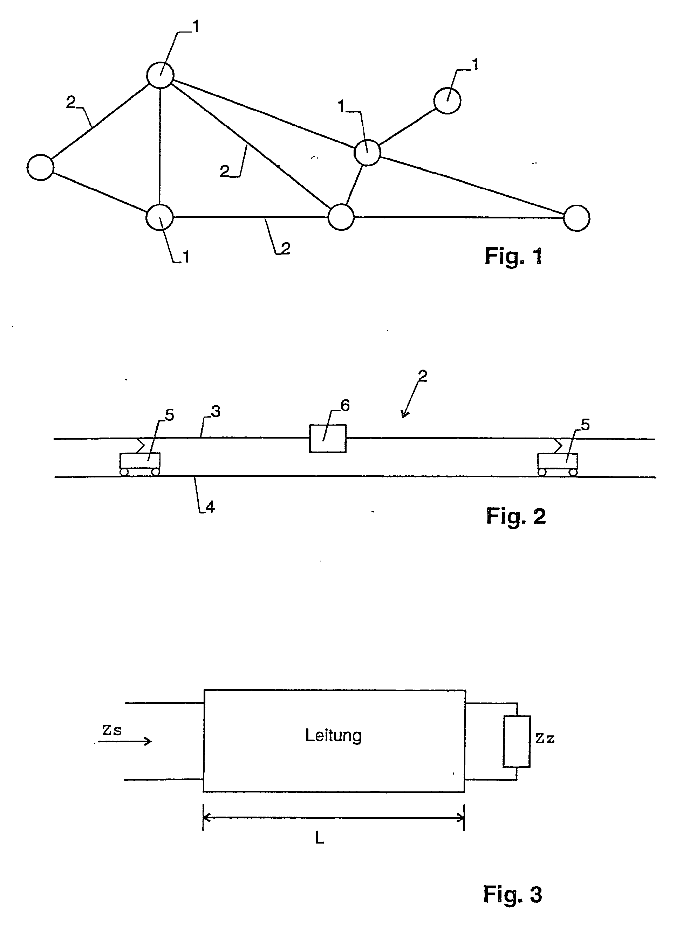

In Fig. 1 ist schematisch ein einfaches Streckennetz dargestellt. Es besteht aus diskreten Punkten 1 und dazwischen liegenden Streckenabschnitten 2. Die diskreten Punkte 1 sind Objekte, deren elektrische Eigenschaften im Modell explizit berücksichtigt werden, wie z.B. Bahnhöfe oder Unterstationen. Die Streckenabschnitte 2 gehen in das Modell als Leitungen ein, deren Eigenschaften gemäss der weiter unten erwähnten Telegrafengleichung berechnet werden. Allfällige weitere Objekte, die sich auf den Streckenabschnitten 2 befinden, werden nicht explizit berücksichtigt, sondern in die elektrischen Leitungseigenschaften des jeweiligen Streckenabschnitts integriert.

Dies ist in Fig. 2 und 3 illustriert. Hier wird von einem Streckenabschnitt ausgegangen, welcher vereinfacht einen Fahrdraht 3 und eine Rück- bzw. Erdleitung 4 aufweist. Auf dem Streckenabschnitt fährt eine gewisse Zahl von Fahrzeugen 5. Ferner sind noch weitere Objekte vorhanden, die die elektrischen Eigenschaften des Streckenabschnitts beeinflussen, wie z.B. ein oder mehrere Boost-Transformatoren 6.

Wären entlang des Streckenabschnitts keine Objekte 5, 6 vorhanden, so könnten dessen Eigenschaften aus dem Längsimpedanz- und Queradmittanzbelag der Leitungen 3, 4 mittels der Telegraphengleichung berechnet werden. Sind Objekte 5, 6 vorhanden, so mussten sie bisher gleich wie die Punkte 1 explizit behandelt werden. Im folgenden wird nun vorgeschlagen, auch eine reale Leitung wie jene nach Fig. 2 zusammen mit den Objekten 5, 6 durch die Telegraphengleichung zu modellieren, indem die Eigenschaften der Objekte 5, 6 als Korrekturen des Längsimpedanz- und Queradmittanzbelags berücksichtigt werden.

In der Telegraphengleichung wird die Eingangsimpedanz $Zs$ einer Leitung gemäss folgender Gleichung berechnet:

$$Zs = Zch \times \frac{Zz + Zch \times tanh(\gamma L)}{Zch + Zz \times tanh(\gamma L)},$$

wobei $L$ die Länge der Leitung ist und $Zz$ die Abschlussimpedanz. $Zch$ ist die charakteristische Impedanz, die aus den Belagswerten der Leitung berechnet werden kann, d.h. aus dem Längsimpedanz- und Queradmittanzbelag $z$ und $y$:

$$Zch = \sqrt{\frac{z}{y}} = \sqrt{\frac{r + j\omega l}{g + j\omega c}},$$

wobei $r$ der Längswiderstandsbelag (Längswiderstand pro Längeneinheit), $l$ der Induktivitätsbelag (Längsinduktivität pro Längeneinheit), $g$ der Ableitungsbelag (inverser Widerstand zwischen den Leitern pro Längeneinheit) und $c$ der Kapazitätsbelag (Kapazität pro Längeneinheit) ist.

$\gamma$ ist die Wellenausbreitungskonstante

$$\gamma = \sqrt{yz} = \sqrt{(r + jl\omega)(g + jc\omega)}$$

Wenn sich keine Objekte 5, 6 auf dem Streckenabschnitt befinden, so entsprechen die Beläge $y$, $z$ den Belägen $y_L$, $z_L$ der Leitung selbst, d.h. $y = y_L$ und $z = z_L$. Wenn sich jedoch Objekte auf dem Streckenabschnitt befinden, so müssen die Werte korrigiert werden, d.h.:

$$Y = Y_L + Y_{corr}$$

$$z = z_L + z_{corr}$$

Die Korrekturwerte $y_{corr}$ und $z_{corr}$ ergeben sich aus der Art der Objekte auf dem Streckenabschnitt. Wird zum Beispiel erwartet, dass sich durchschnittlich $n$ Fahrzeuge auf einem Abschnitt aufhalten (wobei $n$ keine ganze Zahl sein muss), und wird erwartet, dass jedes dieser Fahrzeuge eine Admittanz $y_{fhzg}$ aufweist, so beträgt die Korrektur für den Queradmittanzbelag

$$y_{\text{corr}} = n \times y_{\text{fhzg}} / L .$$

Das $y_{\text{fhzg}}$ ist frequenzabhängig.

Dabei wurde davon ausgegangen, dass alle Fahrzeuge die gleiche Admittanz aufweisen. Falls dies nicht der Fall ist, so müssen deren Beiträge einzeln in die Korrektur eingebracht werden.

Befinden sich Objekte im Streckenabschnitt 2, die dessen Längsimpedanz beeinflussen, so muss dies ebenfalls entsprechend berücksichtigt werden. Sind zum Beispiel m Booster-Transformatoren 6 auf dem Abschnitt angeordnet, und jeder davon besitzt eine Induktivität $L_{\text{bt}}$, so beträgt:

$$z_{\text{corr}} = m \times j\omega L_{\text{bt}} / L .$$

Andere Objekte, wie z. B. Autotransformatoren, können ebenfalls Beiträge zu $z_{\text{corr}}$ und/oder $y_{\text{corr}}$ liefern.

In der soweit beschriebenen Weise kann also ein Bahnnetz wie jenes nach Fig. 1 berechnet werden. Dabei wird jeder Streckenabschnitt durch seinen Längsimpedanzbelag $z$, seinen Queradmittanzbelag $y$ und seine Länge $L$ charakterisiert. Selbstverständlich kann die Charakterisierung auch durch andere, in den Längsimpedanzbelag $z$ bzw. den Queradmittanzbelag $y$ umrechenbare Grössen geschehen, wie z.B. durch den Längswiderstandsbelag $r$, den Induktivitätsbelag $l$, den Ableitungsbelag $g$ und den Kapazitätsbelag $c$.

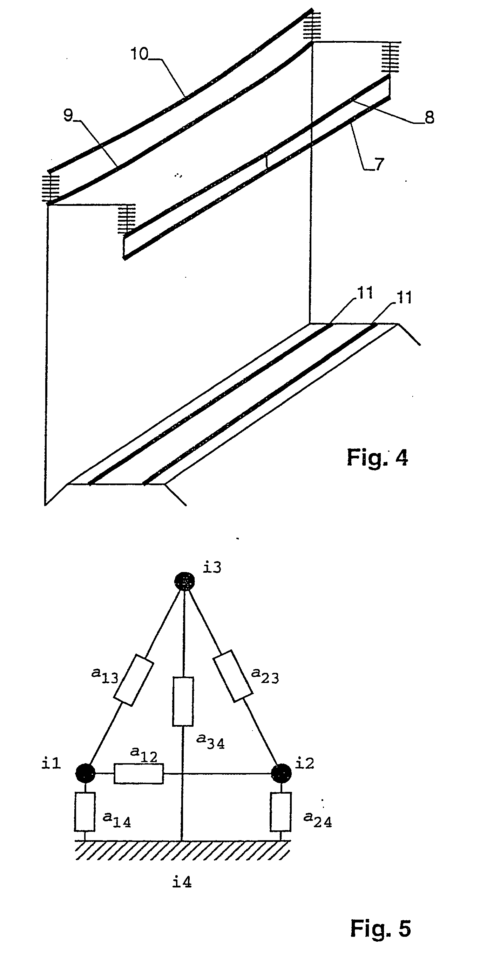

In Fig. 2 wurde von einer einfachen Geometrie mit zwei Leitungen ausgegangen. Das vorliegende Verfahren kann jedoch auch auf kompliziertere Anordnungen angewendet werden, wie sie z. B. in Fig. 4 dargestellt sind. Hier wird ein Streckenabschnitt mit einem Fahrdraht 7, einem Tragseil 8, einem Erdseil 9, einer Speiseleitung 10 und zwei Schienen 11 dargestellt. All diese Teile, und auch die Erde, können bei einer Rechnung berücksichtigt werden. Es ist auch denkbar, einige der Leitungen zusammenzufassen, wie dies in Fig. 5 geschehen ist. Hier wurden Fahrdraht, Tragseil und Speiseleitung zu einem Leiter i3 zusammengefasst, Erde und Erdseil zu einem weiteren Leiter i4, während die beiden Schienenstränge separat als i1 und i2 dargestellt werden. Sowohl der Längsimpedanzbelag $z$ als auch der Queradmittanzbelag $y$ sind in diesem Falle Matrizen mit 4 x 4 Elementen. Die Elemente des Queradmittanzbelags $y$ sind in Fig. 5 schematisch eingezeichnet.

Auch in diesem Fall enthalten die Matrixgrössen $y$ und $z$ sowohl Beiträge der eigentlichen Beläge der Leitungen selbst, als auch Beträge der Objekte 5, 6, die sich auf dem entsprechenden Leitungsabschnitt befinden.

Das hier beschriebene Verfahren erlaubt also, auch komplexe Bahnnetze zu berechnen und z.B. Aussagen über deren elektrische Eigenschaften zu machen. Indem die Eigenschaften von Fahrzeugen und anderen Objekten als Korrektur in den Belagswerten der Streckenabschnitte ausgedrückt werden, reduziert sich die Zahl der Parameter des Systems beträchtlich, ohne dass die Qualität der Aussagen darunter stark leidet. Es genügt, wenn statistische Angaben zur Zahl von Objekten auf den Streckenabschnitten vorliegen.

Bezugszeichenliste:

1: Punkte im Bahnnetz
2: Streckenabschnitte
3: Fahrdraht
4: Rück- bzw. Erdleitung
5: Fahrzeuge
6: Booster-Transformator
7: Fahrdraht
8: Tragseil
9: Erdseil
10: Speiseleitung
11: Schienen

$y$: Queradmittanzbelag
$y_{\text{corr}}$: Korrekturwert des Queradmittanzbelags
$y_{\text{fhzg}}$: Admittanz eines Fahrzeugs

$y_L$: Queradmittanzbelag ohne Objekte
$c$: Kapazitätsbelag
$g$: Ableitungsbelag
$l$: Induktivitätsbelag
$L$: Länge eines Streckenabschnitts
$L_{bt}$: Impedanz eines Booster-Transformators
$m$: Anzahl Booster-Transformatoren
$n$: Anzahl Fahrzeuge
$z$: Längsimpedanzbelag
$z_{corr}$: Korrekturwert des Längsimpedanzbelags
$z_L$: Längsimpedanzbelag ohne Objekte
$Zch$: charakteristische Impedanz
$Zs$: Eingangsimpedanz
$\gamma$: Wellenausbreitungskonstante
$\omega$: Netzfrequenz

**Patentansprüche**

1. Verfahren zur Ermittlung elektrischer Eigenschaften eines Bahnnetzes (1, 2) mit Streckenabschnitten (2), wobei die Streckenabschnitte durch ihren jeweiligen Längsimpedanzbelag (z) und Queradmittanzbelag (y) dargestellt werden, wobei einzelne Objekte (5, 6) in einem Streckenabschnitt (2) als Korrektur (zcorr, ycorr) des Längsimpedanzbelags (z) und/oder des Queradmittanzbelags (y) des jeweiligen Streckenabschnitts berücksichtigt werden, **dadurch gekennzeichnet, dass** der Längsimpedanzbelag (z) bzw. Queradmittanzbelag (y) korrigiert wird, indem eine Zahl (m, n) der Objekte (5, 6) eines gegebenen Typs in dem jeweiligen Streckenabschnitt (2) multipliziert wird mit der Längsimpedanz bzw. Queradmittanz eines Objekts des gegebenen Typs und dividiert wird durch die Länge (L) des jeweiligen Streckenabschnitts, und dass der so erhaltene Wert zum Längsimpedanzbelag bzw. Queradmittanzbelag des Streckenabschnitts addiert wird.

2. Verfahren nach Anspruch 1, **dadurch gekennzeichnet, dass** ein statistisch zu erwartender Wert für die Zahl der Objekte des gegebenen Typs verwendet wird.

3. Verfahren nach Anspruch 1 oder 2, **dadurch gekennzeichnet, dass** einzelne Fahrzeuge (5) in dem jeweiligen Streckenabschnitt (2) zumindest als Korrektur (ycorr) des Queradmittanzbelags (y) des jeweiligen Streckenabschnitts (2) berücksichtigt werden.

4. Verfahren nach einem der vorangehenden Ansprüche, **dadurch gekennzeichnet, dass** Booster-Transformatoren (6) zumindest als Korrektur (zcorr) des Längsimpedanzbelags (z) des jeweiligen Streckenabschnitts berücksichtigt werden.

**Claims**

1. Method for determining the electrical properties of a rail network (1, 2) with track sections (2), with the track sections being presented by their respective longitudinal impedance per unit length (z) and transverse admittances per unit length (y), with individual objects (5, 6) being taken into account in a track section (2) as a correction (zcorr, ycorr) of the longitudinal impedance per unit length (z) and/or the transverse admittance per unit length (y) of the respective track section, **characterised in that** the longitudinal impedance per unit length (z) and transverse admittance per unit length (y) is corrected by a number (m, n) of the objects (5, 6) of a given type is multiplied in a track section (2) by the longitudinal impedance and transverse admittance of an object of the given type and is divided by the length (L) of the respective track section and that the value thus obtained is added to the longitudinal impedance per unit length and transverse admittance per unit length of the track section.

2. Method according to claim 1, **characterised in that** a value which is statically to be expected is used for the number of the objects of the given type.

3. Method according to claim 1 or 2, **characterised in that** individual vehicles (5) in the respective track section (2) are at least taken into account as a correction (ycorr) of the transverse admittance per unit length (y) of the respective track section (2).

**4.** Method according to one of the above claims, **characterised in that** booster transformers (6) are at last taken into account as a correction (zcorr) of the longitudinal impedance per unit length (z) of the respective track section.

**Revendications**

**1.** Procédé permettant de déterminer les propriétés électriques d'un réseau ferré (1, 2) comportant des tronçons de ligne (2), moyennant quoi les tronçons de ligne sont représentés par leur degré d'impédance longitudinale (z) et leur degré d'admittance transversale (y) respectifs, moyennant quoi différents objets (5, 6) dans un tronçon de ligne sont pris en considération (2) sous la forme de correction (zcorr, ycorr) du degré d'impédance longitudinale (z) et/ou du degré d'admittance transversale (y) du tronçon de ligne respectif, **caractérisé en ce que** le degré d'impédance longitudinale (z) ou le degré d'admittance transversale (y) est corrigé **en ce qu'**un nombre (m, n) d'objets (5, 6) d'un type donné dans un tronçon de ligne (2) est multiplié par l'impédance longitudinale ou l'admittance transversale d'un objet du type donné et divisé par la longueur (L) du tronçon de ligne respectif, puis on ajoute la valeur ainsi obtenue au degré d'impédance longitudinale ou au degré d'admittance transversale du tronçon de ligne.

**2.** Procédé selon la revendication 1, **caractérisé en ce qu'**on utilise une valeur attendue statistiquement en tant que nombre d'objets du type donné.

**3.** Procédé selon la revendication 1 ou 2, **caractérisé en ce que** différents véhicules (5) dans le tronçon de ligne (2) respectif sont pris en considération au moins sous forme de correction (ycorr) du degré d'admittance transversale (y) du tronçon de ligne (2) respectif.

**4.** Procédé selon l'une quelconque des revendications précédentes, **caractérisé en ce qu'**on prend en considération des transformateurs relais (6) au moins comme correction (zcorr) du degré d'impédance longitudinale (z) du tronçon de ligne respectif.

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PETROV, O. I. ; GRIMALSKI, K.** Berechnung der elektrischen Größen in Oberleitungen und Schienen von Wechselstrombahnen. *ELEKTRISCHE BAHNEN,* November 1990, vol. 88 (11), 398-402

- **CHANG, C.S. ; CHAN, T.T. ; HO, S.L. ; LEE, K.K.** AI applications and solution techniques for AC-railway-system control and simulation. *IEE-PROCEEDINGS-B,* Mai 1993, vol. 140 (3), 166-176